# EUROPEAN PATENT APPLICATION

(11) **EP 4 383 471 A1**
(43) Date of publication of application: **12.06.2024**
(21) Application number: 22211804.4
(22) Date of filing: 06.12.2022
(51) Int. Cl.: H01R 13/44, H01M 50/502, H01R 43/20, H01R 13/11

(54) **POWER CONNECTOR WITH A MOVABLE TOUCH-PROOF ELEMENT**

(71) Applicant: Aptiv Technologies Limited, St. Michael (BB)
(72) Inventor: GUILLANTON, Mélanie, 28230 Épernon (FR); TINTILIER, Sébastien, 28130 St Martin de Nigelles (FR)
(74) Representative: INNOV-GROUP

(57) **Abstract**

A power connector (3) comprising a dielectric housing (6), at least one power terminal (7) accommodated in the housing (6) and a touch-proof element (17) made providing a security protection preventing the intrusion, between the housing (6) and the touch-proof element (17), of a probe (20) the dimensions of which are predetermined by a standard, so as to prevent said at least one power terminal (7) from being brought into contact with said probe (20). The touch proof element (17) is supported by an assurance member (10) which is formed as a separate part from the housing (6) and which is movable relative to the housing (6), between a delivery position and a final position in which the connector (3) is functional.

## Description

### Technical Field

The disclosure below relates to the field of power connectors. More particularly, this disclosure relates to power connectors equipped with a touch-proof element providing a security protection preventing a terminal that is under high voltage to be touched with a finger or a solid foreign body larger than a predetermined dimension. Such power connectors can be used in motor vehicles.

### Prior Art

In the field of motor vehicles and in particular electric, hybrid or plug-in hybrid vehicles, high currents can be transmitted in wiring networks and/or electrical power circuits, such as those interconnecting elements such as a battery, a motor, a voltage converter, etc. Similarly, even if the currents are not necessarily of very high intensity, the voltages involved may be relatively high and in particular higher than 60 Volts.

When it is necessary to integrate connectors into the wiring networks intended to transmit high-intensity and/or high-voltage currents, these connectors must be provided with terminals of sufficiently large size and section to transmit these currents without excessive heating. For example, male terminals with a cross-sectional area of up to 113mm2 or more may be used. Similarly, female terminals must be able to accommodate male terminals with such cross-sections and be protected, particularly when used at voltages above 60V. It is well known to prevent a terminal from being touched, using a touch-proof element integrally formed with, or attached to, a connector housing so as to reduce the room left, between the touch-proof element and the housing, for accessing the terminal. For example, it has been proposed touch-proof elements having a finger shape located along the symmetry axis of a female terminal having a tulip-shape. Such a solution has the advantage that the touch-proof element has a rather good rigidity and does not deform while applying for example a 10N force on the touch-proof finger.

There are configurations, especially right-angle configurations, for which it is quite complicated to design manufacturing tools that allow to implement a touch-proof element. This is even more complicated when other important features, such as terminal latch retention features, also need to be implemented.

The present disclosure aims at providing a solution which at least partially solves this problem.

### Summary of the invention

For this purpose, it is proposed a power connector according to claim 1. Thanks to this power connector, the touch-proof element can be manufactured (e.g. molded) independently of the housing. Therefore, the tools for manufacturing respectively the touch-proof element and the housing can be designed independently, which facilitates the design of the tools (e.g. molding tools). Further, rather than manufacturing the touch-proof element as a new specific part, the touch-proof function is added to an assurance member which is already intended to be mounted in the connector such as a connector position assurance member (also called CPA member) or a terminal position member (also called TPA member). This decreases the number of parts to manage and this decreases the number of assembly steps.

In this document, a "probe the dimensions of which are predetermined by a standard" corresponds to a body having a shape which is defined by a protection class (e.g. class IP2X defined by IEC 60529 standard), which is itself defined to prevent access to hazardous parts with fingers and which protects the equipment inside the housing against ingress of solid foreign objects having for example a diameter of 12.5 mm and greater. Other standards and norms can define other probe dimensions.

The disclosed power connector possibly comprises one and/or the other of the features listed in Claims 2 to 11, each considered independently of each other or in combination with one or more others.

### Brief description of the drawings

Other features, purposes and advantages of the disclosure will become apparent on reading the following detailed description given with reference to the appended drawings and by way of non-limiting examples and in which:
Figure 1 is a schematic and exploded representation in perspective of an example embodiment of a battery connection assembly;
Figure 2 is a schematic cross-section of a power connector of the battery connection assembly shown in Figure 1, this power connector being represented with the CPA member in delivery position;
Figure 3 is a schematic cross-section of the power connector shown in Figure 2, this power connector being inserted in the header cavity of a header connector, the power connector and the header connector being in an intermediate position in which the CPA member is still in the delivery position;
Figure 4 is similar to Figure 3, the CPA member being represented in the connection position;
Figure 5 is a schematic cross-section of the power connector shown in Figures 2 to 4, with a touch-proof probe;
Figure 6 is a schematic representation in perspective of a second example of a power connector, with a touch-proof probe;
Figure 7 is a schematic representation of a cross-section and in perspective of a connector similar to the one represented in figure 6, with a TPA member in final position;
Figure 8 is a schematic cross-section of the connector represented in figure 7, with the TPA member in delivery position;
Figure 9 is a schematic cross-section of the connector represented in figures 7 and 8, with the TPA member in final position.

### Detailed description

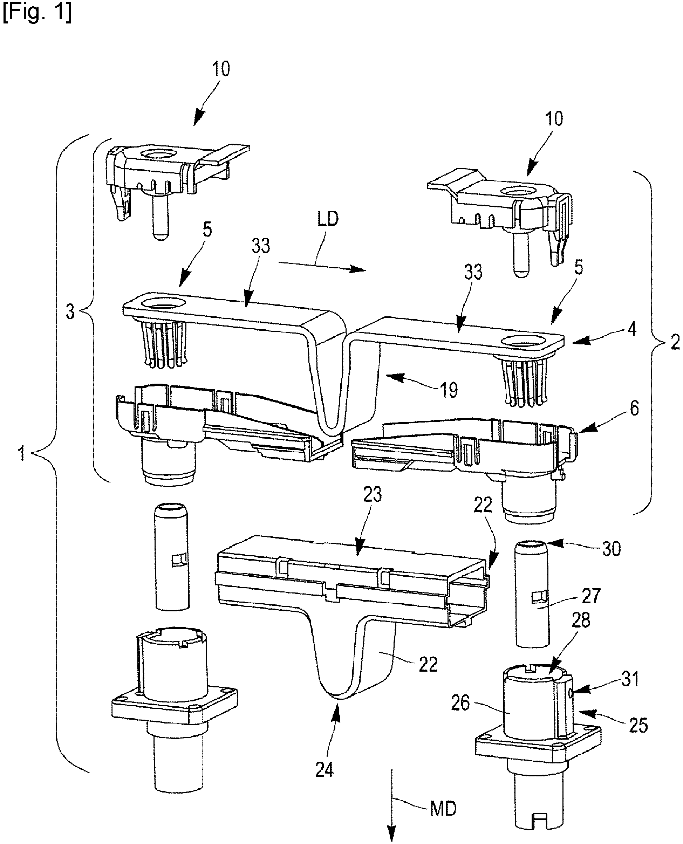

An example of an embodiment of a connection assembly is shown in Figure 1. In this example, the connection assembly is a battery connection assembly, but this disclosure can be transposed to other applications while keeping in particular basic elements such as the CPA member, the female terminal and the housing.

According to this example, the battery connection assembly 1 comprises a busbar connection assembly 2 which connects through a respective counter-connector 25 (e.g. a header connector), two poles, positive and negative respectively, of two battery modules (not shown).

The busbar connection assembly 2 comprises two power connectors 3, each one located at a respective busbar end 5 of a busbar 4. The connectors 3 are right-angle power connectors. In other words, in the connector housing 6, the connector terminals 7 are respectively arranged in a right-angle configuration with regard to the main direction of the busbar 4. The mating direction MD is perpendicular to the main direction of the busbar 4 in the connector housing 6.

It will be noted that, although the present disclosure relates to a busbar connection assembly 2 comprising two power connectors 3, the design of a single power connector 3 for connecting a busbar 4 or another kind of conductor to a counter-connector, can be derivable from this description. It is sufficient to replace at least one of the power connectors 3 with a suitable connector for connection to a circuit, a counter-connector, etc.

The busbar 4 is for example made of plurality of conductive layers (e.g. of copper or a copper alloy). In other words, the busbar 4 has a multi-layered structure (e.g. with 6 layers). A connector terminal 7 is mechanically fastened and electrically connected at each busbar end 5. The busbar 4 extends essentially longitudinally along a longitudinal direction LD. More particularly, as shown in Figure 1, the busbar 4 has two straight portions 33 extending longitudinally along the longitudinal direction LD and in between of which is located a V-shaped portion 19.

The V-shaped portion 19 is housed in a cover 22. The cover 22 is made of a dielectric material and provides a protection to at least a level defined by the protection class IP2X (standard IEC 60529). The cover 22 has a tooth shape (triangle shape) extending essentially in a mating direction MD, from a base 23 to an apex 24. Such a configuration provides the advantage that the cover 22 is located in a volume comprised between the two power connectors 3. In other words, this configuration is rather compact and does not add more height (i.e. in the mating direction MD) to the busbar connection assembly 2.

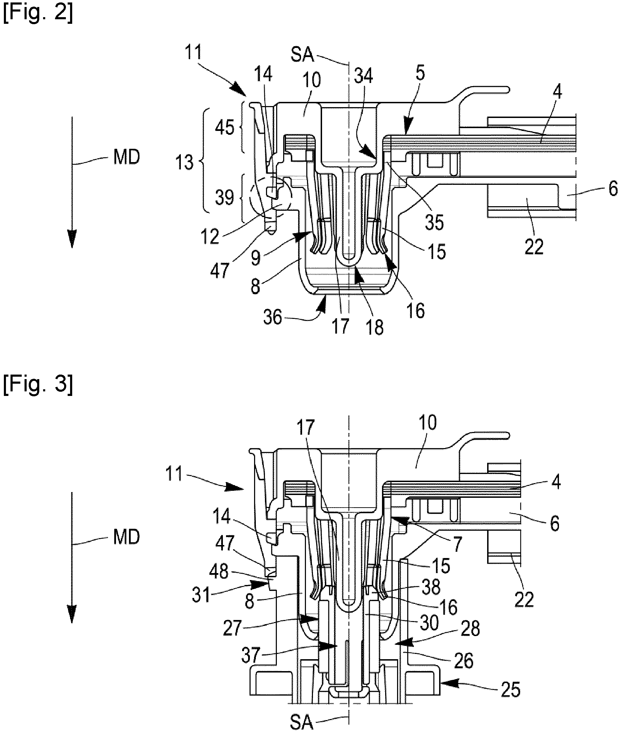

As shown in particular in Figure 2, each power connector 3 comprises an electrically insulating connector housing 6, an electrically insulating CPA member 10 (forming an insulating cap) and a connector terminal 7. For example, the connector housing 6 and the electrically insulating CPA member 10 are made of moulded plastic. Each connector housing 6 accommodates a connector terminal 7 electrically connected to a respective busbar end 5.

In the illustrated example, each connector terminal 7 is a female terminal. Each connector terminal 7 comprises a crown or sleeve 35 fastened to a busbar end 5. A plurality of contact blades 15 extends longitudinally essentially in the mating direction MD and is arranged symmetrically around a circular symmetry axis SA which is parallel to the mating direction MD. Each contact blade 15 extends longitudinally from the crown 35, with which it is integral, to a free end 16.

Each connector housing 6 comprises a guiding portion 8 in which a connection portion 9 of the connector terminal 7 is housed. More particularly, each free end 16 of a contact blade 15 is located in the corresponding guiding portion 8.

Each CPA member 10 at least partially closes the connector housing 6. Each CPA member 10 is configured so as to prevent the connector terminal 7 and the busbar end 5 housed in the connector housing 6 from being touched by an operator (in other words, the connector housing 6 and the CPA member 10 provide a protection to at least the IP2X level).

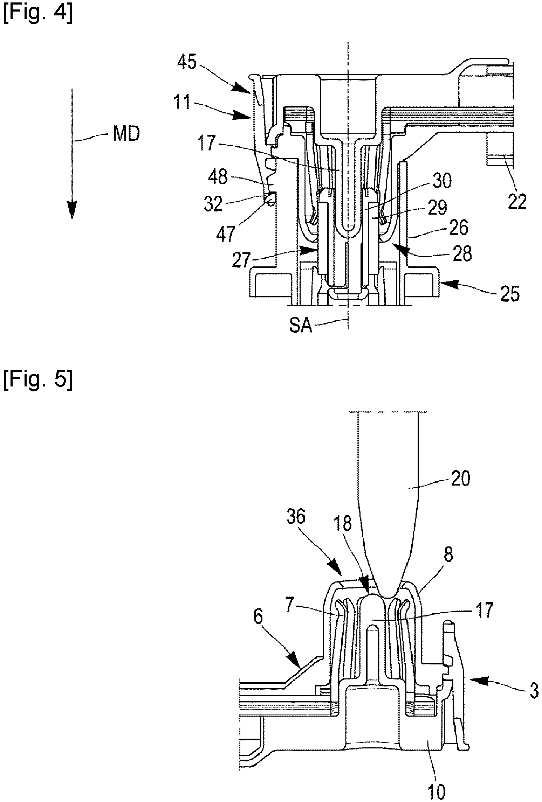

Each one of the connector terminals 7 and busbar ends 5 are mechanically and rigidly attached into a respective CPA member 10. More precisely, each CPA member 10 has a fastening peg 34 that is forced into a crown 35 of a connector terminal 7 (however several other means can be envisioned for fastening the CPA member 10 onto a connector terminal 7 and/or the busbar 4). The CPA member 10, the connector terminal 7 and the busbar end 5 are movable together relative to the connector housing 6 between at least a delivery position (Figure 2) and a final position (Figure 4).

In the delivery position (Figure 2), the connection portion 9 is retracted further into the guiding portion 8 than in the final position (Figure 4). In other words, in the delivery position, the free ends 16 of the contact blades 15 are further away from the mating interface 36 of the guiding portion 8 (this mating interface 36 corresponds to the opening through which the terminal of a counter-connector can be inserted).

Each CPA member 10 comprises CPA locking means 11. The CPA locking means 11 comprises a lever 13 hinged on the CPA member 10. The lever 13 comprises a locking portion 39 and an actuating portion 45, respectively located on each side of a hinge. The locking portion 39 comprises a first stop 14 engaging a protrusion 12 integral with the connector housing 6, for holding the CPA member 10 and the connector housing 6 in the delivery position (see the region marked with a doted-line circle in Fig. 2). As already explained, in the delivery position, the connector terminal 7 is maintained retracted in the connector housing 6 further away from the mating interface 36 than in the final position.

The CPA locking means 11 is actuatable between a locked position and an unlocked position. More particularly, the CPA locking means rotates/tilts about the hinge between the locked position and the unlocked position. In its locked position, the CPA locking means 11 engages the protrusion 12 to hold the CPA member 10 and the connector housing 6 together in the delivery position. In its unlocked position, the CPA locking means 11 releases the CPA member 10 from the protrusion 12, so as to allow the CPA member 10 to be pushed into the final position, by an operator (or a robot).

Each CPA member 10 comprised a finger 17 extending essentially parallel to the mating direction MD, from the fastening peg 34 to a tip 18. The finger 17 is integral with the CPA member 10. In the illustrated example, the finger 17 has a cylindrical shape. The connection portion 9 of the connector terminal 7 is retracted behind the tip 18. Thereby, the finger 17 and the guiding portion 8 provides an IP2X protection. As shown in Fig. 5, the finger 17 forms a touch-proof element and provides a security protection preventing the intrusion, between the guiding portion 8 of the connector housing 6 and the tip 18 of the finger 17, of a probe 20. In other words, the shortest distance between the tip 18 of the finger 17 and the edge of the opening formed in the mating face 26 for the insertion of the header terminal 27, is short enough for preventing the connector terminal 7 from being brought into contact with the probe 20. In this example, the probe 20 has dimensions predetermined by the class IP2X of the IEC 60529 standard.

As illustrated in Figures 1, 3, and 4, a header connector 25 comprises a header housing 26. A header terminal 27 is housed in each header housing 26. Each header housing 26 is made of an electrically insulating material (for example, it is made of moulded plastic). Each header housing 26 has a header cavity 28 within which a connection portion 29 of the header terminal 27 protrudes. The header terminal 27 is configured so as to be mated with the connector terminal 7.

In the illustrated example, the header terminal 27 is a male terminal. The header terminal 27 has essentially a cylindrical shape with a cylindrical axis SA parallel to the mating direction MD. The header terminal 27 has a recess 37 extending longitudinally parallel to the mating direction MD. The header terminal 27 is made of conductive material such as copper or a copper alloy for example. The header terminal 27 comprises an insulating end piece 30. The insulating end piece 30 is partially inserted in the recess 37. The insulating end piece 30 has a ring 38 which covers the circular edge of the free end of the header terminal 27, thereby the header housing 26 and the insulating end piece 30 provide an IP2X protection. The insulating end piece 30 forms a hollow cylinder configured to receive at least a portion of the finger 17.

In order to connect two electrical battery modules of electrical or hybrid vehicle, the following method is implemented by an operator (alternatively by a robot).

During a pre-positioning step the two guiding portions 8 of a busbar connection assembly 2 are each respectively aligned with a header connector 25 of an electrical battery module and each guiding portion 8 is positioned opposite a respective header cavity 28.

During a plugging step, each guiding portion 8 is inserted in a respective header cavity 28 up to an intermediate position in which the CPA locking means 11 of each power connector 3 interacts with respective unlocking means 31 comprised on each header connector 25. In this intermediate position, the CPA locking means 11 are still in the locked position (figure 3). At this stage, the free end 16 of the contact blades 15 rests on the insulating end piece 30 (i.e. there is no risk of electrical contact between the connector terminals 7 and the header terminals 27).

During a connecting step, the CPA member 10 is pushed in the mating direction MD so that the CPA locking means 11 is released by the unlocking means 31 and can be moved up to a configuration wherein the CPA member 10 is in its final connection position. For example, the unlocking means 31 comprises a tooth 48 with an inclined surface and a second stop 47 integral with the lever 13. While the CPA member 10 is pushed in the mating direction MD, the second stop 47 slides on the inclined surface (in other words the incline surface is part of the unlocking means 31). Thereby, the lever 13 is tilted and the first stop 14 is released from the protrusion 12. In other words, the lever 13 is operated by its interaction with the counter-connector 25, when the connector is mated to this counter-connector 25.

When the CPA member 10 is further pushed in the mating MD, the CPA locking means 11 locks onto the header locking means 32 integral with the header connector 25. More particularly, for example, as shown in Fig. 4, the second stop 47 is blocked by a stop surface behind the tooth 48 (in other words the stop surface forms header locking means 32). In this configuration, the guiding portion 8 is inserted in the header cavity 28 in a final position and the CPA member 10 is also in its final position.

In the illustrated example, the CPA locking means 11 and the locking means used for locking the power connector 3 and the header connector 25 together in the final position, involves the same lever 13. However, alternatively, these means can be distinct.

In order to un-mate the power connector 3 and the header connector 25, an operator pushes on the actuating portion 45 of the lever 13, and pull the CPA member 10 in a direction opposite to the mating direction MD.

As one can understand, positioning the connector terminals 7 (i.e. busbar terminals) on the header terminals 27 (i.e battery terminals) and establishing an electrical contact between them are distinct operations. During the positioning (i.e. prepositioning and intermediate plugging steps), the connection portion 9 of the connector terminals 7 cannot electrically connect the corresponding header terminal 27. Indeed, the CPA member 10 (onto which the connector terminal 7 is mounted) is retained in the delivery position by the CPA locking means 11. This is only when the power connector 3 is well positioned onto the header connector 25, that the CPA locking means 11 can be released so as to allow the CPA member 10 to be pushed to its final connection position in which the connector terminal 7 connect the header terminal 27.

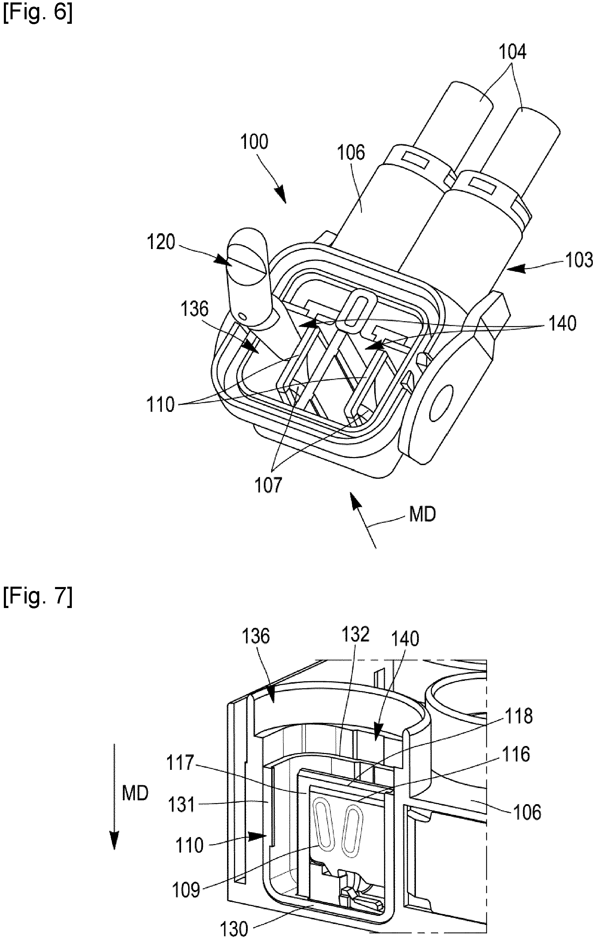

Another example embodiment of a connection assembly shown in Figures 6 to 9 (The connector shown in Figure 6 is not exactly the same as the one represented in Figure 7 to 9 but has a same functioning). In this second example, the connection assembly is a cable connector assembly.

According to this example, the cable connector assembly 100 is a two-way connector assembly. It comprises in particular, a male power connector 103 and two power cables 104. The power connector 103 accommodates in particular two connector terminals 107 and two assurance members 110. Each assurance member 110 is a terminal position assurance member (TPA member 110 below). Each power cable 104 is mechanically and electrically linked to a connector terminal 107.

Each connector terminal 107 is a male terminal with a connection portion 109 having essentially a plate-like shape (See Figures. 7 to 9). The connector 103 is a right-angle connector. In other words, the connector 103 comprises a connector housing 106, within which the connector terminals 107 are respectively arranged in a right-angle configuration with regard to the main direction of the power cables 104. The connector housing 106 is made of dielectric material. The mating direction MD is perpendicular to the main direction of the power cables 104 in the connector housing 106. The connector housing 106 has a mating interface 136 configured so that terminals of a counter-connector can penetrate the connector housing 106 to make an electrical contact with the connector terminals 107. Each connector terminal 107 has a front edge 116 extending essentially perpendicular to a mating direction MD. The front edge 116 is essentially rectilinear.

The TPA member 110 is made of dielectric material. The TPA member 110 has a cup-like shape with a bottom 130 essentially perpendicular to the mating direction MD and, for example, a peripheral wall 131 extending in the mating direction MD from the bottom 130 (of course other shapes can be envisioned for the TPA member 110, for example one or several legs can extend in the mating direction MD from a bottom wall essentially perpendicular to the mating direction MD).

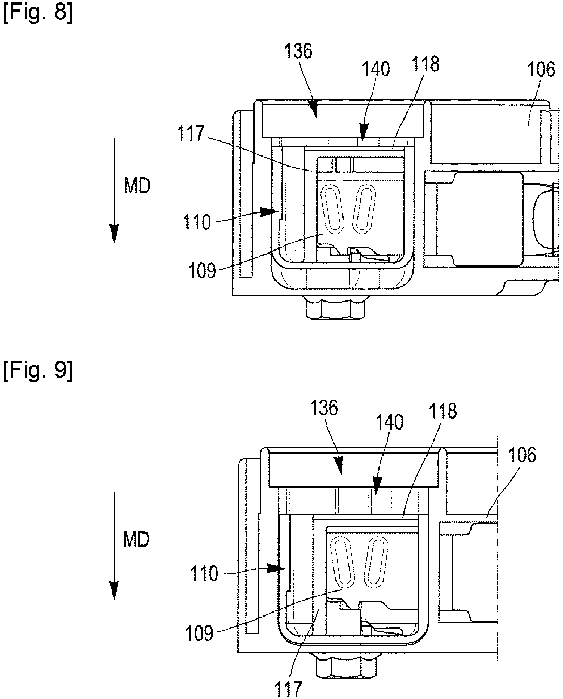

The connector housing 106 comprises in particular two cavities 140. A TPA member 110 and a connector terminal 107 are accommodated in each cavity 140. Each TPA member 110 is movable relative to the connector housing 106, in its respective cavity 140, between a delivery position (Figure 8) and a final position (Figure 9) in which the connector 103 is functional. Each TPA member 110 is held in the housing 106, in the delivery position, closer to the mating interface 136, than in the final position.

The TPA member 110 comprises a touch proof element 117. The touch proof element 117 is integral with the TPA member 110. The touch proof element 117 extends essentially in a plane parallel to the connection portion 109. The touch proof element 117 extends essentially in the mating direction MD, from the bottom 130 of the cup-like shape. The touch proof element 117 has a ridge 118. The ridge 118 is essentially rectilinear. The ridge 118 is positioned further in the mating direction MD than the front edge 116, so as to prevent the connection portion from being brought into contact with a probe 120, both in the delivery position and in the final position.

In the delivery position, and as long as an appropriate terminal 103 is not fully and properly inserted in its respective cavity 140, the TPA member 117 is locked upwards (in reference with the connector orientation shown in Figure 8). While in this upward position, the TPA member 110 prevents a mating (or at least a functional mating) of the connector 103 with a counter-connector. Indeed, the edge 132 on the top of the peripheral wall 131 of the cup-like shape would block the mating interface of a counter-connector so as to prevent such a counter-connector to be moved further in the mating direction MD. However, once an appropriate terminal 103 is fully and properly inserted in its respective cavity 140, the TPA member 117 is unlocked and is moved downward. In this final position, a counter-connector can be mated with the connector 103 and a female terminal accommodated in the counter-connector can be brought into electrical contact with the terminal 103.

## Claims

1. A power connector (3, 103) comprising
- a dielectric housing (6, 106),
- at least one power terminal (7, 107), electrically connected and attached to a conductor (4, 104), and accommodated in a cavity formed in the housing (6, 106) and
- a touch-proof element (17, 117) made in a dielectric material and providing a security protection preventing the intrusion, between the housing (6, 106) and the touch-proof element (17, 117), of a probe (20, 120) the dimensions of which are predetermined by a standard, so as to prevent said at least one power terminal (7, 107) from being brought into contact with said probe (20, 120),
**characterized in that** the touch proof element (17, 117) is supported by an assurance member (10, 110) which is formed as a separate part from the housing (6, 106) and which is movable relative to the housing (6, 106), between a delivery position and a final position in which the connector (3, 103) is functional.

2. The power connector (3, 103) of claim 1, wherein the power terminal (7, 107) is arranged in a right-angle configuration with regard to the main direction, in the housing (6, 106), of the conductor (4, 104) to which it is attached.

3. The power connector (3) of claim 1 or 2, wherein the assurance member (10) is a connector position assurance member, and the assurance member (10) comprises locking means (11) for holding the assurance member (10) in the delivery position where said at least one power terminal (7) is maintained retracted in the housing (6) further away from the mating interface (36) than in the final position.

4. The power connector (3) of claim 3, wherein the housing (6) comprises a protrusion (12) and the locking means (11) comprises a lever (13) hinged on the assurance member (10), the lever (13) comprising a first stop (14) engaging the protrusion (12), for holding the assurance member (10) in the delivery position, the lever (13) being operable manually or by interaction with a counter-connector (25), when the connector (3) is mated to this counter-connector (25).

5. The power connector (3) according to any one of the preceding claims, wherein said at least one power terminal (7) is a female terminal having contact blades (15) extending longitudinally essentially in a mating direction (MD) and arranged symmetrically around a symmetry axis (SA) which is parallel to the mating direction (MD), each contact blade (15) having a free end (16), each free end (16) being located inside a guiding portion (8) of the housing (6), and wherein the touch proof element is a finger (17) extending essentially parallel to the symmetry axis (SA), the assurance member (10) and the finger (17) being integral, and the finger (17) having a tip (18) positioned within the guiding portion (8) and further in the mating direction (MD) than each free end (16) of contact blade (15), whether in the delivery position or in the final position.

6. The power connector (3) of claim 5, wherein the guiding portion (8) has a mating interface (36) with an opening surrounded by an edge, the shortest distance between the tip (18) of the finger (17) and the edge is short enough for preventing said at least one power terminal (7) from being brought into contact with said probe (20).

7. The power connector (3) according to any one of the preceding claims, wherein said at least one power terminal (7) and the assurance member (17) are fixedly mounted on a busbar (4), said at least one power terminal (7) and the busbar (4) moving with the assurance member (17) between the delivery position and the final position.

8. The power connector (103) of claim 1 or 2, wherein the assurance member (110) is a terminal position assurance member, and the assurance member (110) in the delivery position prevents the connector (103) from being fully mated to a counter-connector.

9. The power connector (103) of claim 8, wherein said at least one power terminal (107) is a male terminal with a connection portion (109) having essentially a plate-like shape and having a front edge (116) extending essentially perpendicular to a mating direction (MD), and wherein the touch proof element (117) extends essentially in a plane parallel to the connection portion (109) and has a ridge (118) positioned further in the mating direction (MD) than the front edge (116), so as to prevent the connection portion (109) from being brought into contact with said probe (120).

10. The power connector (103) of claim 9, wherein the housing (106) comprises a cavity (140) accommodating the connection portion (109) of said at least one power terminal (107), and wherein the assurance member (110) has cup-like shape accommodated in the cavity (140), the touch proof element (117) extending in the mating direction (MD), from the bottom (130) of the cup-like shape.

11. The power connector (103) according to any one of claims 8 to 10, wherein the housing (106) has a mating interface (136) configured so that a terminal of a counter-connector penetrates the housing (106) to make electrical contact with said at least one power terminal (107), the assurance member (110) being held in the housing (106) closer to the mating interface (136) than in the final position.
